# EUROPEAN PATENT SPECIFICATION

(11) **EP 3 375 941 B1**
(45) Date of publication and mention of the grant of the patent: **09.06.2021**
(21) Application number: 17000672.0
(22) Date of filing: 21.04.2017
(51) Int. Cl.: E03C 1/05, E03C 1/04, F16K 31/02

(54) **A TOUCH SENSITIVE TAP**
BERÜHRUNGSEMPFINDLICHER HAHN
ROBINET TACTILE

(30) Priority: 15.03.2017 CN 201710152715
(43) Date of publication of application: 19.09.2018
(73) Proprietor: Xiamen Solex High-Tech Industries Co., Ltd., Xiamen Area of China (Fujian) Pilot Free Trade Zone (CN)
(72) Inventor: ZHUO, Zhiwei, Fujian 361000 (CN); HONG, Chunjie, Fujian 361000 (CN); CHEN, Wenxing, Fujian 361000 (CN)
(74) Representative: Verscht, Thomas Kurt Albert

(56) References cited:
- CN-U- 204 314 367
- DE-C1- 10 148 675
- US-A1- 2013 276 911
- US-A1- 2014 261 750

## Description

### Field of the invention

The present invention relates to a touch sensitive tap.

### Background of the invention

In the current market, the touch sensitive tap comprises a tap main body, a support pipe, an outlet portion, a waterway and an on-off control portion. The support pipe is rotatably installed on the tap main body, and the outlet portion is connected to the support pipe. The waterway is at least connected from the main body to the support pipe and is connected to the outlet portion. The support pipe has a touch sensing area for the user to touch; the on-off control portion is installed below the tap main body. The on-off control portion can control the waterway to turn on and off after receiving the touch signal. In order to seal the rotational connection of the tap main body and the support pipe, and have a better rotating feeling, it is necessary to provide a plastic element or a rubber element between the tap main body and the support pipe to make the two not directly contact. In order to realize the electrical connection between the touch area and the on-off control portion, the touch sensitive tap on the existing market use the following two ways: 1.The connection method between the tap main body and the support pipe is capacitive coupling. The support pipe transmits the signal to the tap main body, then the tap main body transmits the signal to the on-off control portion. It has the following deficiencies: The sensitivity of the touch area on the support pipe is low, even a touch failure may occur. 2. A conductive metal element or a rigid electronic element is provided between the support pipe and the tap main body to realize the direct electrical conduction of the tap main body and the support pipe. The support pipe transmits the signal to the tap main body through the metal element or the rigid electronic element, then the tap main body transmits the signal to the on-off control portion. It has the following deficiencies: the cost and difficulty of installation is increased, and the support pipe will scrap and make noise during the process of rotation, because the dielectric (metal element or rigid electronic element) is a rigid material.

From US 2013/276 911 A1 an electronic faucet is known including a spout hub and a pullout wand removably coupled to the spout hub. The pullout wand is touch sensitive when docked to the spout hub, and is not touch sensitive when undocked from the spout hub. From CN 204 314 367 U a leakage current measuring sensor of a high-voltage switchgear insulator is known, which comprises an insulator. A current leading ring made from conductive silicone rubber sleeves the insulator and is connected to a current sensor through a conducting wire. When the leakage current measuring sensor is in use, leakage current is guided under the function of the current leading ring and is connected to the current sensor through the conducting wire to perform leakage current measurement.

From US 2014/261 750 A1 a capacitive sensing faucet is known. In one exemplary embodiment, the faucet includes a a faucet body hub; a spout coupled to the faucet body hub; an insulator defining a capacitive coupling between the faucet body hub and the spout, wherein the insulator is formed from an electrically conductive polymer; a capacitive sensor having an electrode coupled to the faucet body hub; and a controller coupled to the capacitive sensor, the controller determining if the spout is touched by a user based on an output signal from the capacitive sensor.

From DE 101 48 675 C1 a tap is known, the tap having a hollow tap body with a cylindrical section on the entry side containing a function block with a pilot valve, a valve which is controlled by the pilot valve and an electronic control circuit board for the pilot valve coupled to a proximity detector, located at the rear of an opening in the tap body. The function block is sealed within the tap body by an O-ring above the opening for the proximity detector, the water outlet of the function block leading to the chamber above the O-ring, so that the water circulates around the upper part of the function block lying above the plane of the O-ring.

### Summary of the invention

The present invention provides a touch sensitive tap, which overcome the deficiencies of the touch sensitive tap mentioned in background of the invention.

The technical scheme adopted by the present invention to solve the technical problem are:
The touch sensitive tap, comprising a tap main body, a support pipe,
an outlet portion, a waterway and an on-off control portion; the support pipe is rotatably assembled to the tap main body, the outlet portion is connected to the support pipe, the waterway is at least connected from the tap main body to the support pipe and is connected to the outlet portion, the on-off control portion is coupled to the waterway to control the open and close of the waterway; the support pipe is disposed with a touch sensing area for user to touch, a conductive silicone ring is disposed between the tap main body and the support pipe to connect the tap main body and the support pipe in sealing way, the conductive silicone ring electrically connects the tap main body and the support pipe to form an integral conductor, the integral conductor acquires touch signal from the touch sensing area and transmits the signal to the on-off control portion, the on-off control portion turns on and turns off the waterway after receiving the signal.

The tap main body is disposed with a touch sensing area for user to touch.

The support pipe and the tap main body are made of conductive material, the external surface of the support pipe and the tap main body form the touch sensing area.

It further comprises a signal wire, the signal wire signal connects the tap main body and the on-off control portion.

The outlet portion is fixedly connected to the end opening of the support pipe.

It further comprises a connecting sleeve made of conductive material, the tap main body is disposed with an assembly hole; the connecting sleeve is fixedly connected to one end opening of the support pipe and is disposed with an extending portion, the extending portion is capable of rotatably inserting to the assembly hole of the tap main body, the conductive silicone ring is disposed between the extending portion and the inner wall of the assembly hole of the tap main body.

The assembly hole is a throughout hole; the waterway comprises a water pipe; one end of the water pipe is connected to the outlet of the on-off control portion, the other end passes through the assembly hole of the tap main body and inserts to the support pipe from the end opening thereof and connects to the outlet portion. The water pipe is a flexible pipe, the outlet portion is detachably assembled to the other end opening of the support pipe.

The pipe body of the water pipe is made of non-conductive material.

The tap main body further comprises a main control valve and a handle controlling the main control valve; hot water inlet of the main control valve is connected to a hot water resource, cool water inlet of the main control valve is connected to a cool water resource, the mixing water outlet of the main control valve is connected to the inlet of the on-off control portion.

Compared with the background of the invention, the technical scheme has the following advantages:
A conductive silicone ring is disposed between the tap main body and the support pipe, so the disadvantages of the background of the invention are overcame, and it brings the following technical effects: firstly, the electrical connection mode of the tap main body and the support pipe is direct coupling, and the tap main body and the support pipe form an integral conductor, thus increasing the sensitivity of the touch sensing area of the support pipe. It can avoid the failure phenomenon that when the touch sensing area of the support pipe is touched. The support pipe and the tap main body has the same sensitivity that improves the user's sense of experience; secondly, the conductive silicone ring connects the tap main body and the support pipe in sealing way, which can prevent the outage of the water from interfering circuit connection through a small gap between the tap main body and the support pipe, enhancing the stability of the circuit used; thirdly, the conductive silicone ring is elastic, it can eliminate the gap between the support pipe and the tap main body. It can also reduce the wobble of the support pipe with respect to the tap main body or avoid the wobble; fourthly, the conductive silicone ring has a certain degree of elastic deformation when it is squeezed by the tap main body and the support pipe, increasing the area of the fitting-surface and frictional resistance, also enhancing the hand feel of the users.

The support pipe and the tap main body are made of conductive material, the external surface of the support pipe and the tap main body form the touch sensing area, so the tough sensing area is large.

The connecting sleeve is fixedly connected to one end opening of the support pipe and is disposed with an extending portion, the extending portion is capable of rotatably inserting to the assembly hole of the tap main body, the conductive silicone ring is disposed between the extending portion and the inner wall of the assembly hole of the tap main body. The assembly is quick and convenient, and the strength of the connection is higher.

### Detailed description of the drawings

The present invention will be further described with the drawings and the embodiments.
FIG.1 illustrates a schematic diagram of a tap of a preferred embodiment of the present invention.
FIG.2 illustrates a partial sectional diagram of a tap of the preferred embodiment of the present invention.
FIG.3 illustrates a partial magnification diagram of FIG.2
FIG.4 illustrates a schematic diagram of the tap main body and support pipe in separating situation of the preferred embodiment of the present invention.
FIG.5 is a specific application example of the preferred embodiment.
FIG.6 illustrates a schematic diagram of a tap of another preferred embodiment of the present invention.

### Detailed description of the embodiments

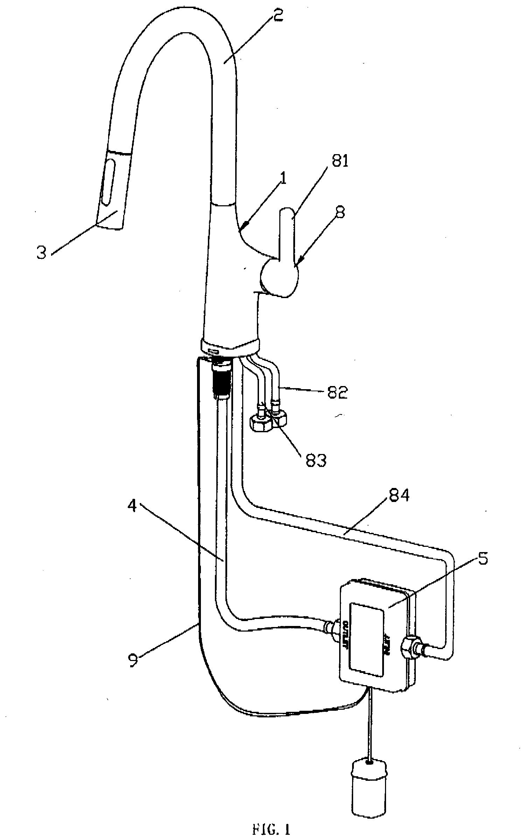

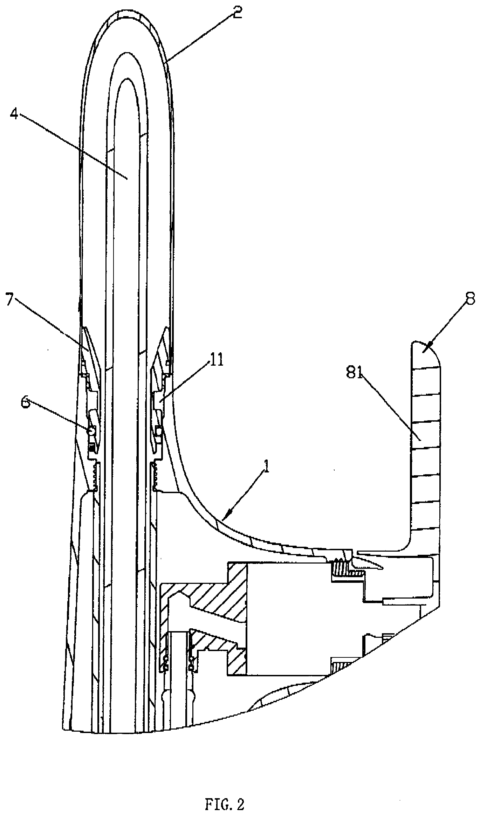

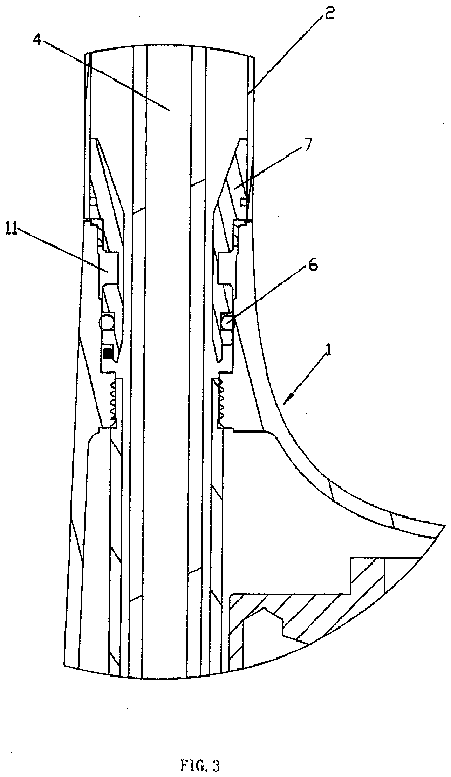

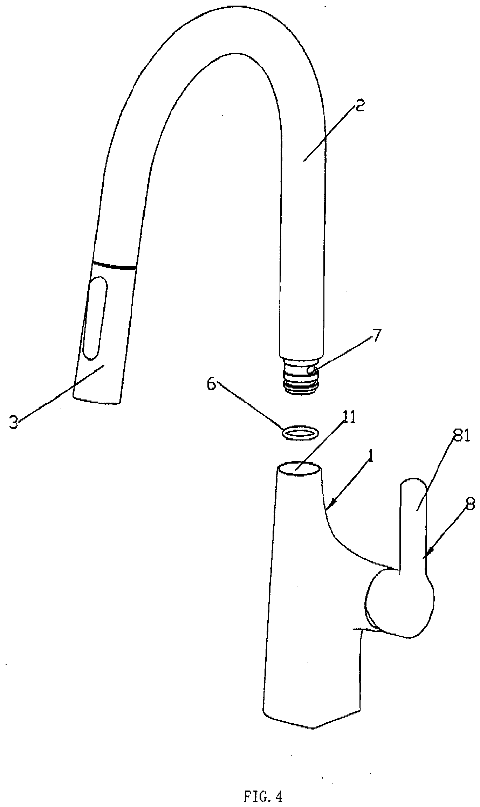

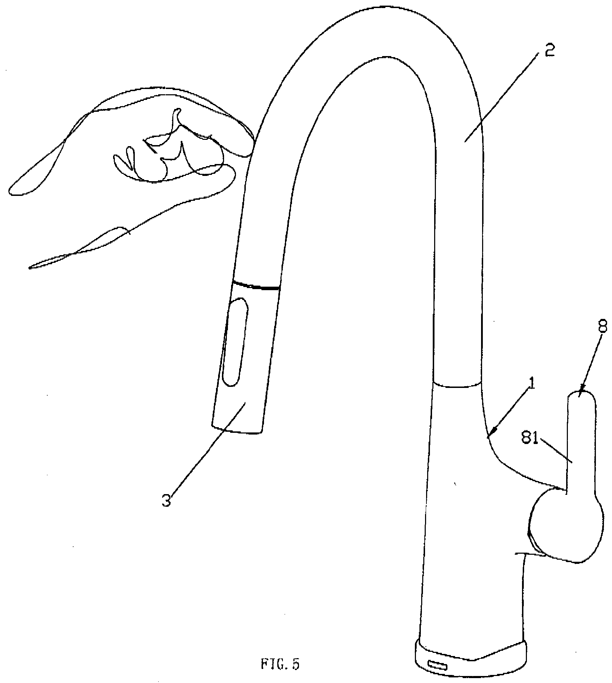

Please refer to FIGS 1-5, the touch sensitive tap comprise a tap main body 1, a support pipe 2, an outlet portion 3, a waterway 4 and an on-off control portion 5.

The tap main body 1 is made of conductive material, and it further comprises a main control valve 8 and a handle 81 controlling the main control valve 8; a hot water Inlet of the main control valve 8 is connected to a hot water resource 82, a cool water inlet of the main control valve 8 is connected to a cool water resource 83, a mixing water outlet of the main control valve 8 is connected to an inlet of the on-off control portion 5 through the connecting pipe 84. The user can control the water temperature and the flow volume of the outlet mixing water through the handle 81. The structure of the main control valve 8 and the structure of the handle mentioned above can adopt the valve and handle of the current technology. The tap main body 1 is disposed with an assembly hole 11 running through the main body from up to down.

The support pipe 2 is rotatably assembled to the tap main body 1, and the support pipe 2 is made of conductive material. A connecting sleeve 7 made of conductive material is further provided; the connecting sleeve 7 is fixedly connected to one end opening of the support pipe 2 and is disposed with an extending portion, the extending portion can be inserted to the assembly hole 11 of the tap main body 1, and a certain gap is formed between the extending portion and the inner wall of the assembly hole, such that the gap enables the support pipe 2 to rotate relative to the body without hindrance. A conductive silicone ring 7 is disposed between the extending portion and the inner wall of the assembly hole 11 of the tap main body 1. The conductive silicone ring 7 is made of conductive silica gel. The conductive silicone ring 7 electrically connects the tap main body 1 and the connecting sleeve 7 of the support pipe 2, so the gap mentioned above is closed. And the support pipe 2 is rotatably assembled to the tap main body 1 stably with no wobble. So the conductive silicone ring 7 connects the tap main body 1 and the support pipe 2 in sealing way. The conductive silicone ring 7 electrically connects the tap main body 1 and the support pipe 2 and makes the tap main body 1 and the support pipe 2 form an integral conductor.

The on-off control portion 5 located under the tap main body 1 is coupled to the waterway 4. The on-off contorl portion comprises a controller and an electric control valve; the controller is signal connected to the electric control valve to control its on-off and then control the open and close of the waterway 4. The waterway 4 comprises a water pipe and the water pipe is a flexible pipe made of non-conductive material. One end of the water pipe is connected to the outlet of the on-off control portion 5, the other end passes through the assembly hole 11 of the tap main body 1 and inserts to the support pipe 2 from the end opening of the support pipe 2. The outlet portion 3 is fixedly connected to the other end opening of the support pipe 2, and is connected to the other end of the pipe.

The tap main body 1 and the support pipe 2 are made of conductive material, so the external surface of the support pipe 2 and the tap main body 1 form the touch sensing area. In which: the touch sensing area of the support pipe 2 is touched and a touch signal generates, the signal is transmitted to the tap main body 1 through the conductive silicone ring 7. Then the tap main body 1 transmits the signal to the on-off control portion 5 through a signal wire 9, for example the controller; the touch sensing area of the tap main body 1 is touched and a touch signal generates, the signal from the tap main body 1 transmits to the on-off control portion 5 through the signal wire 9. The on-off control portion 5 turns on or turns off the waterway 4 after receiving the signal. If for example, the controller receives the signal to drive the on-off control valve to turn on or turn off the waterway 4.

In this embodiment: the conductive silicone ring 7 is provided at the connection between the tap main body and the support pipe, so it has the following technical effects: firstly, the tap main body is directly coupled to the support pipe, the tap main body and the support pipe form an integral conductor. The touch sensing area can be set on the tap main body, which increases the touch sensing area, and increases the sensitivity of the touch area of the support pipe. It can avoid the phenomenon of failure when the touch area of the support pipe is touched. The support pipe and the tap main body has the same sensitivity, that improve the user's sense of experience; secondly, the conductive silicone ring 7 sealed connect the tap main body and the support pipe, which can prevent the outage of the water through a small gap between the tap main body and the support pipe from interfering circuit connection when users used; thirdly, the conductive silicone ring 7 is elastic, it can eliminate the gap between the support pipe and the tap main body. It can also reduce wobble of the support pipe relative to the tap main body or avoiding wobble; fourthly, the conductive silicone ring 7 has a certain degree of elastic deformation when it is squeezed by the tap main body and the support pipe, increasing the co-area and frictional resistance, also enhance the feel of the users.

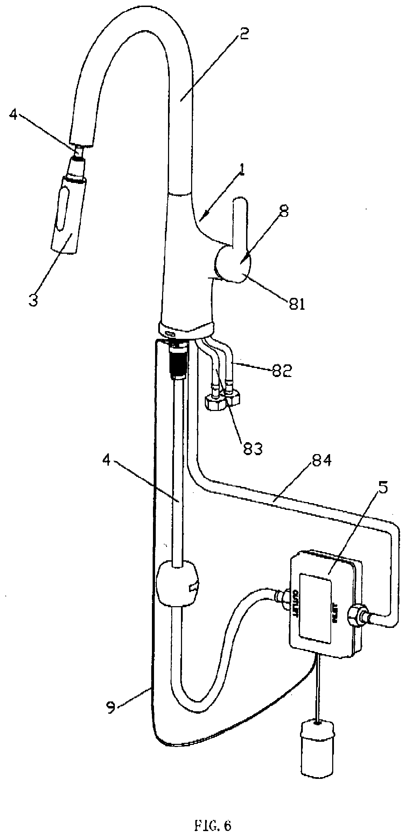

In other specific embodiment, it differs from the previous preferred embodiment in that: please refer to FIG.6 , the outlet portion 3 is detachably connected to the end opening of the support pipe 2, making the tap become a pull-type tap ( Utilize the flexible performance of flexible water pipes, reserve the length of the flexible pipe, so the length of the flexible pipe is greater than that between one end of the connection of the support pipe and the outlet portion 3 and the outlet of the on-off control portion 5 ), so users can take out the outlet portion 3 from the support pipe when used, and insert it back to anther end of the support pipe 2.

The invention may be summarized as follows: Disclosed is a touch sensitive tap, which comprises a tap main body, a support pipe, an outlet portion, a waterway and an on-off control portion; the support pipe is disposed with a touch sensing area for user to touch. A conductive silicone ring is disposed between the tap main body and the support pipe to connect the tap main body and the support pipe in sealing way, the conductive silicone ring electrically connects the tap main body and the support pipe to form an integral conductor, the integral conductor acquires touch signal from the touch sensing area and transmits the signal to the on-off control portion, the on-off control portion turns on and turns off the waterway after receiving the signal. It has the following advantages: the electrical connection mode of the tap main body and the support pipe is direct coupling, increasing the sensitivity of the touch area of the support pipe. The support pipe and the tap main body has the same sensitivity; the conductive silicone ring sealed connect the tap main body and the support pipe, enhancing the stability of the circuit used; it can eliminate the gap between the support pipe and the tap main body, thus efficiently avoiding the wobble; the conductive silicone ring increase the area of the fitting-surface and frictional resistance, also enhance the feel of the users.

Although the present invention has been described with reference to the preferred embodiments thereof for carrying out the patent for invention, it is apparent to those skilled in the art that a variety of modifications and changes may be made without departing from the scope of the patent for invention which is intended to be defined by the appended claims.

## Claims

1. A touch sensitive tap, comprising a tap main body (1), a support pipe (2), an outlet portion (3), a waterway (4) and an on-off control portion (5); the support pipe (2) is rotatably assembled to the tap main body (1), the outlet portion (3) is connected to the support pipe (2), the waterway (4) is at least connected from the tap main body (1) to the support pipe (2) and is connected to the outlet portion (3), the on-off control portion (5) is coupled to the waterway (4) to control the open and close of the waterway (4); wherein the support pipe (2) is disposed with a touch sensing area for user to touch, a conductive silicone ring (6) is disposed between the tap main body (1) and the support pipe (2) to connect the tap main body (1) and the support pipe (2) in sealing way, the conductive silicone ring (6) electrically connects the tap main body (1) and the support pipe (2) to form an integral conductor, the integral conductor, in use, acquires touch signal from the touch sensing area and transmits the signal to the on-off control portion (5), the on-off control portion (5) turns on and turns off the waterway (4) after receiving the signal.

2. The touch sensitive tap according to claim 1, wherein the tap main body (1) is disposed with a touch sensing area for user to touch.

3. The touch sensitive tap according to claim 1 and/or 2, wherein the support pipe (2) and the tap main body (1) are made of conductive material, the external surface of the support pipe (2) and the tap main body (1) form the touch sensing area.

4. The touch sensitive tap according to any one or more of claims 1 to 3, wherein further comprising a signal wire (9), the signal wire (9) signal connects the tap main body (1) and the on-off control portion (5).

5. The touch sensitive tap according to any one or more of claims 1 to 4, wherein the outlet portion (3) is fixedly connected to the end opening of the support pipe (2).

6. The touch sensitive tap according to any one or more of claims 1 to 5, wherein further comprising a connecting sleeve (7) made of conductive material, the tap main body (1) is disposed with an assembly hole (11); the connecting sleeve (7) is fixedly connected to one end opening of the support pipe (2) and is disposed with an extending portion, the extending portion is capable of rotatably inserting to the assembly hole (11) of the tap main body (1), the conductive silicone ring (6) is disposed between the extending portion and the inner wall of the assembly hole (11) of the tap main body (1).

7. The touch sensitive tap according to claim 6, wherein the assembly hole (11) is a throughout hole; the waterway (4) comprises a water pipe; one end of the water pipe is connected to the outlet of the on-off control portion (5), the other end passes through the assembly hole (11) of the tap main body (1) and inserts to the support pipe (2) from the end opening thereof and connects to the outlet portion (3).

8. The touch sensitive tap according to claim 7, wherein the pipe body of the water pipe is made of non-conductive material.

9. The touch sensitive tap according to claim 7 and/or 8, wherein the water pipe is a flexible pipe, the outlet portion (3) is detachably assembled to the other end opening of the support pipe (2).

10. The touch sensitive tap according to any one or more of claims 1 to 9, wherein the tap main body (1) further comprises a main control valve (8) and a handle (81) controlling the main control valve (8); hot water inlet of the main control valve (8) is connected to a hot water resource (82), cool water inlet of the main control valve (8) is connected to a cool water resource (83), the mixing water outlet of the main control valve (8) is connected to the inlet of the on-off control portion (5).

## Patentansprüche

1. Ein berührungsempfindlicher Hahn, der einen Hahnhauptkörper (1), ein Stützrohr (2), einen Auslassteil (3), einen Wasserweg (4) und einen Ein-Aus-Steuerteil (5) aufweist; das Stützrohr (2) ist drehbar mit dem Hahnhauptkörper (1) zusammengebaut, der Auslassteil (3) ist mit dem Stützrohr (2) verbunden, der Wasserweg (4) ist wenigstens von dem Hahnhauptkörper (1) zu dem Stützrohr (2) verbunden und ist mit dem Auslassteil (3) verbunden, der Ein-Aus-Steuerteil (5) ist mit dem Wasserweg (4) gekoppelt, um das Öffnen und Schließen des Wasserwegs (4) zu steuern; wobei das Stützrohr (2) mit einer Berührungsabfühlfläche angeordnet ist, und zwar für einen Anwender zum Berühren, ein leitender Silikonring (6) ist zwischen dem Hahnhauptkörper (1) und dem Stützrohr (2) angeordnet, um den Hahnhauptkörper (1) und das Stützrohr (2) in abdichtender Weise zu verbinden, der leitende Silikonring (6) verbindet den Hahnhauptkörper (1) und das Stützrohr (2) elektrisch, um einen integralen Leiter zu bilden, der integrale Leiter erlangt, im Gebrauch, ein Berührungssignal von der Berührungsabfühlfläche und überträgt das Signal an den Ein-Aus-Steuerteil (5), der Ein-Aus-Steuerteil (5) schaltet sich ein und schaltet den Wasserweg (4) nach Empfang des Signals ab.

2. Der berührungsempfindliche Hahn nach Anspruch 1, wobei der Hahnhauptkörper (1) mit einer Berührungsabfühlfläche angeordnet ist, und zwar für einen Anwender zum Berühren.

3. Der berührungsempfindliche Hahn nach Anspruch 1 und/oder 2, wobei das Stützrohr (2) und der Hahnhauptkörper (1) aus leitendem Material hergestellt sind, die Außenoberfläche des Stützrohrs (2) und der Hahnhauptkörper (1) bilden die Berührungsabfühlfläche.

4. Der berührungsempfindliche Hahn nach einem oder mehreren der Ansprüche 1 bis 3, wobei dieser ferner ein Signaldraht (9) aufweist, das Signaldraht (9)-Signal verbindet den Hahnhauptkörper (1) und den Ein-Aus-Steuerteil (5).

5. Der berührungsempfindliche Hahn nach einem oder mehreren der Ansprüche 1 bis 4, wobei der Auslassteil (3) fest mit der Endöffnung des Stützrohrs (2) verbunden ist.

6. Der berührungsempfindliche Hahn nach einem oder mehreren der Ansprüche 1 bis 5, wobei dieser ferner eine Verbindungshülse (7), die aus leitendem Material hergestellt ist, aufweist, der Hahnhauptkörper (1) ist mit einem Zusammenbauloch (11) angeordnet; die Verbindungshülse (7) ist fest mit einer Endöffnung des Stützrohrs (2) verbunden und ist mit einem Erstreckungsteil angeordnet, der Erstreckungsteil ist fähig, drehbar in das Zusammenbauloch (11) des Hahnhauptkörpers (1) eingesetzt zu werden, der leitende Silikonring (6) ist zwischen dem Erstreckungsteil und der Innenwand des Zusammenbaulochs (11) des Hahnhauptkörpers (1) angeordnet.

7. Der berührungsempfindliche Hahn nach Anspruch 6, wobei das Zusammenbauloch (11) ein Durchgangsloch ist; der Wasserweg (4) weist ein Wasserrohr auf; ein Ende des Wasserrohrs ist mit dem Auslass des Ein-Aus-Steuerteils (5) verbunden, das andere Ende geht durch das Zusammenbauloch (11) des Hahnhauptkörpers (1) und ist in das Stützrohr (2) von der Endöffnung davon eingesetzt und mit dem Auslassteil (3) verbunden.

8. Der berührungsempfindliche Hahn nach Anspruch 7, wobei der Rohrkörper des Wasserrohrs aus nicht-leitendem Material hergestellt ist.

9. Der berührungsempfindliche Hahn nach Anspruch 7 und/oder 8, wobei das Wasserrohr ein flexibles Rohr ist, der Auslassteil (3) ist lösbar an der anderen Endöffnung des Stützrohrs (2) zusammengebaut.

10. Der berührungsempfindliche Hahn nach einem oder mehreren der Ansprüche 1 bis 9, wobei der Hahnhauptkörper (1) ferner ein Hauptsteuerventil (8) und einen Griff (81), der das Hauptsteuerventil (8) steuert, aufweist; ein Heißwassereinlass des Hauptsteuerventils (8) ist mit einer Heißwasserquelle (82) verbunden, ein Kaltwassereinlass des Hauptsteuerventils (8) ist mit einer Kaltwasserquelle (83) verbunden, der Mischwasserauslass des Hauptsteuerventil (8) ist mit dem Einlass des Ein-Aus-Steuerteils (5) verbunden.

## Revendications

1. Robinet tactile, comprenant un corps principal de robinet (1), un tuyau de support (2), une partie de sortie (3), un passage d'eau (4) et une partie de commande marche-arrêt (5) ; le tuyau de support (2) est assemblé à rotation avec le corps principal de robinet (1), la partie de sortie (3) est raccordée au tuyau de support (2), le passage d'eau (4) est au moins raccordé depuis le corps principal de robinet (1) au tuyau de support (2) et est raccordé à la partie de sortie (3), la partie de commande marche-arrêt (5) est reliée au passage d'eau (4) pour commander l'ouverture et la fermeture du passage d'eau (4) ; dans lequel le tuyau de support (2) est disposé avec une zone de détection tactile à toucher par l'utilisateur, une bague en silicone conductrice (6) est disposée entre le corps principal de robinet (1) et le tuyau de support (2) pour raccorder le corps principal de robinet (1) et le tuyau de support (2) de manière étanche, la bague en silicone conductrice (6) raccorde électriquement le corps principal de robinet (1) et le tuyau de support (2) pour former un conducteur intégral, le conducteur intégral, lors d'une utilisation, acquiert un signal tactile depuis la zone de détection tactile et transmet le signal à la partie de commande marche-arrêt (5), la partie de commande marche-arrêt (5) ouvre et ferme le passage d'eau (4) après réception du signal.

2. Robinet tactile selon la revendication 1, dans lequel le corps principal de robinet (1) est disposé avec une zone de détection tactile à toucher par l'utilisateur.

3. Robinet tactile selon la revendication 1 et/ou 2, dans lequel le tuyau de support (2) et le corps principal de robinet (1) sont faits d'un matériau conducteur, la surface externe du tuyau de support (2) et du corps principal de robinet (1) forment la zone de détection tactile.

4. Robinet tactile selon l'une ou plusieurs des revendications 1 à 3, comprenant en outre un fil de signal (9), le signal de fil de signal (9) raccorde le corps principal de robinet (1) et la partie de commande marche-arrêt (5).

5. Robinet tactile selon l'une ou plusieurs des revendications 1 à 4, dans lequel la partie de sortie (3) est raccordée de manière fixe à l'ouverture d'extrémité du tuyau de support (2).

6. Robinet tactile selon l'une ou plusieurs des revendications 1 à 5, comprenant en outre un manchon de raccordement (7) fait d'un matériau conducteur, le corps principal de robinet (1) est disposé avec un trou d'assemblage (11) ; le manchon de raccordement (7) est raccordé de manière fixe à une ouverture d'extrémité du tuyau de support (2) et est disposé avec une partie d'extension, la partie d'extension est apte à s'insérer à rotation dans le trou d'assemblage (11) du corps principal de robinet (1), la bague en silicone conductrice (6) est disposée entre la partie d'extension et la paroi intérieure du trou d'assemblage (11) du corps principal de robinet (1).

7. Robinet tactile selon la revendication 6, dans lequel le trou d'assemblage (11) est un trou traversant; le passage d'eau (4) comprend un tuyau d'eau; une extrémité du tuyau d'eau est raccordée à la sortie de la partie de commande marche-arrêt (5), l'autre extrémité passe à travers le trou d'assemblage (11) du corps principal de robinet (1) et s'insère dans le tuyau de support (2) depuis l'ouverture d'extrémité de celui-ci et se raccorde à la partie de sortie (3).

8. Robinet tactile selon la revendication 7, dans lequel le corps de tuyau du tuyau d'eau est fait d'un matériau non conducteur.

9. Robinet tactile selon la revendication 7 et/ou 8, dans lequel le tuyau d'eau est un tuyau flexible, la partie de sortie (3) est assemblée de manière amovible sur l'autre ouverture d'extrémité du tuyau de support (2).

10. Robinet tactile selon l'une ou plusieurs des revendications 1 à 9, dans lequel le corps principal de robinet (1) comprend en outre une vanne de commande principale (8) et une poignée (81) commandant la vanne de commande principale (8) ; une entrée d'eau chaude de la vanne de commande principale (8) est raccordée à une ressource d'eau chaude (82), une entrée d'eau froide de la vanne de commande principale (8) est raccordée à une ressource d'eau froide (83), la sortie d'eau de mélange de la vanne de commande principale (8) est raccordée à l'entrée de la partie de commande marche-arrêt (5).
